# EUROPÄISCHE PATENTSCHRIFT

(11) **EP 0 590 449 B1**
(45) Veröffentlichungstag und Bekanntmachung des Hinweises auf die Patenterteilung: **04.12.2002**
(21) Anmeldenummer: 93115048.6
(22) Anmeldetag: 18.09.1993
(51) Int. Cl.: G01F 1/68, G01P 5/10

(54) **Kalorimetrischer Strömungswächter**
Calorimetric flow monitor
Moniteur d'écoulement calorimétrique

(30) Priorität: 02.10.1992 DE 4233284
(43) Veröffentlichungstag der Anmeldung: 06.04.1994
(73) Patentinhaber: Kobold, Klaus, Belleair Shore, FL 34635 (US)
(72) Erfinder: Wenzel, Manfred, c/o KEIL & SCHAAFHAUSEN, D-60322 Frankfurt am Main (DE); Willner, Jürgen, c/o KEIL & SCHAAFHAUSEN, D-60322 Frankfurt am Main (DE)
(74) Vertreter: Keil, Rainer A., Dipl.-Phys. Dr.

(56) Entgegenhaltungen:
- EP-A- 0 210 509
- DE-A- 3 729 073
- FR-A- 1 580 333
- US-A- 3 640 133
- US-A- 3 754 201

## Beschreibung

Die Erfindung bezieht sich auf die Verwendung eines kalorimetrischen Strömungswächters.

Ein derartiger Strömungswächter ist aus der DE-A-3 729 073 bekannt, welcher einen auf dem kalorimetrischen Prinzip beruhenden Sensor zur Umwandung eines physikalischen Parameters eines strömenden Mediums offenbart. Der Sensor weist ein hohizylindrisches Gehäuse auf, das an seinem vorderen stirnseitigen Ende zu einem verdickten zylindrischen Kopf erweitert ist. Auf diesen in das zu messende strömende Medium ragenden Kopf ist eine die vordere Zylinderöffnung verschließende, gleichfalls zylindrische Anströmkappe aufgesetzt, mit welcher ein kugelkappenförmig gewölbter Träger auf dem Gehäuse gehalten ist. An dessen konkaver Innenfläche ist ein temperaturempfindlicher Widerstand mittels einer wärmeleitenden Gießmasse befestigt. Da das metallene Gehäuse des Strömungswächters mit seinem zylindrischen Vorderabschnitt in das z.B. in einer Leitung strömende Medium hineinragt, wird das Meßergebnis z.B. wegen Querschnittsverengung der freien Strömungsfläche verfälscht. Problematisch ist bei dem bekannten Strömungswächter ferner die Gewährleistung einer reproduzierbaren Herstellung des Wärmeübergangs von dem Sensorelement in das strömende Medium, d.h. einer zuverlässigen wärmeleitenden Ankopplung, was von besonderer Bedeutung ist, da der Meßeffekt, d.h. der als Widerstandsänderung gemessene Effekt, in der Regel nur wenige Prozent des temperaturabhängigen Widerstandes beträgt.

Die US-A-3 754 201 offenbart einen einen Thermistor aufweisenden Sensor zur Strömungsmessung. Dessen hohlzylindrisches Gehäuse weist einen verjüngten, in das strömende Medium ragenden vorderen zylindrischen Abschnitt auf. Am stirnseitigen Ende dieses eine Öffnung aufweisenden Gehäuseabschnitts ist eine diese verschließende dünne, metallene und nur leicht nach außen gewölbte Abdeckplatte befestigt. An deren Innenseite ist der Thermistor angeklebt, welcher eine Bestimmung von Strömungsgrößen nach dem kalorimetrischen Prinzip gestatten soll. Die Wölbung der Abdeckplatte ist so gering (0,003 inch), daß sie nicht als besondere geometrische Formgebung des stirnseitigen Gehäuseendes aufgefaßt werden kann. Auch hier führt der zylindrische Abschnitt, mit welchem das Sensorgehäuse in das zu messende strömende Medium hineinragt, zur Beeinträchtigung der Strömungsverhältnisse und zur Ablagerung von Verunreinigungen.

Aus der EP-A-0 210 509 ist ein Verfahren zum Messen der Eigenschaften eines Fluids bekannt, bei welchem ein Sensorelement mit temperaturabhängigem Widerstand mit dem Fluid in Wärmekontakt steht. Das Sensorelement ist während eines ersten, vorbestimmten und begrenzten Zeitintervalls stromdurchflossen und wird mit vorbestimmter elektrischer Leistung aufgeheizt. Während eines sich anschließenden vorbestimmten und begrenzten Zeitintervalls wird das Sensorelement gekühlt. Aus der Widerstandsänderung des Sensorelements, welches dem Temperaturverlauf des Elements während der Heizperiode bzw. der Kühlperiode entspricht, soll unmittelbar auf die Eigenschaften des Fluids, z.B. die Art, Zusammensetzung, Strömungsgeschwindigkeit bzw. Massenstrom oder auf das Niveau eines in einem Behälter befindlichen Fluids zurückgeschlossen werden. Hierbei befindet sich das gesamte Strömungselement in nachteiliger Weise innerhalb des zu messenden ggf. strömenden Mediums.

Bei dem aus der FR-A-1 580 333 für die Überwachung des Durchflusses von Kühlmittel in einer Energieerzeugungsanlage bestimmten bekannten Vorrichtung ragt der Meßfühler ebenfalls mit einem zylindrischen vorderen Abschnitt in das zu messende Medium hinein, wobei der zylindrische Abschnitt von einer kugelkappenähnlichen Rundung abgeschlossen ist. Ein Halbleiterelement befindet sich im Abstand von einer kugelkappenähnlichen Rundung abgeschlossen ist. Ein Halbleiterelement befindet sich im Abstand von der kugelkappenförmigen Stirnwandung eingebettet in einem Harz. Durch den zylindrischen in das zu messende strömende Medium hineinragenden Abschnitt werden die Strömungsverhältnisse In nachteiliger Weise beeinträchtigt und es findet eine schlechte Wärmeübertragung zu dem Halbleiterelement statt.

Aufgabe der Erfindung ist es, einen Strömungswächter der eingangs genannten Art so zu verwenden, dass eine höhere Meßgenauigkeit und Reproduzierbarkeit erreicht wird.

Diese Aufgabe wird erfindungsgemäß mit den Merkmalen des Anspruchs 1 gelöst.

Durch die bei Verwendung des Strömungswächters ausschließliche kegefstumpfförmige Ausbildung des in das zu messende Medium eintauchtenden Abschnitts werden die Strömungsverhältnisse im Bereich der Stirnwandung, an dessen Innenfläche das Sensorelement anliegt, günstig beeinflußt. Auch wird die Ablagerung von störenden Verunreinigungen, welche mit dem zu messenden Medium mitgeführt werden, behindert. Dadurch kann die Strömungsgeschwindigkeit wesentlich zuverlässiger gemessen werden.

Ein noch zuverlässiger reproduzierbarer Wärmeübergang kann dann erzielt werden, wenn gemäß einer Weiterbildung der Erfindung der kegelstumpfförmige Abschnitt nach spanabhebender Vorfertigung mittels Prägestempel insbesondere im Bereich der Stirnwandung kalibriert ist. Hierdurch wird nicht nur die Stirnwandung in ihrer Stärke mit hoher Präzision gefertigt, auch die Innenfläche, an welcher das Sensorelement anliegt, ist von großer den Wärmeübergang erleichternden Ebenheit.

Gemäß einem weiteren Vorschlag der Erfindung ist vorgesehen, daß das mit einer wärmeleitenden elektrisch isolierenden Schicht an der Innenfläche der Stirnwandung anliegende Sensorelement mittels einer in einer Längsbohrung des Gehäuses reibschlüssig eingesteckten Halterung, z.B. aus Kunststoff, an die Innenfläche in wärmeleitendem Kontakt angedrückt ist. Hierdurch wird bei einfacher Montage dauerhaft ein zuverlässiger Wärmeübergang von dem Sensorelement in das strömende Medium erzielt.

Um einen möglichst gleichbleibenden und dauerhaften Wärmeübergang von dem Sensorelement in das strömende Medium zu gewährleisten, kann das Sensorelement mit seiner der Innenfläche der Stirnwandung zugewandten wärmeleitenden, elektrisch isolierenden Schicht an der Innenfläche angelötet oder über eine metallische Zwischenschicht festgelegt sein.

Toleranzen bei der Montage können dadurch auf einfache Weise ohne die Gefahr von Beschädigungen des Sensorelements ausgeglichen werden, wenn sich das Sensorelement auf einem an der Vorderseite der Halterung vorgesehenen Polster aus gummielastischem Material abstützt.

Die elektrischen Anschlußleitungen für das Sensorelement können zweckmäßigerweise durch die Halterung und durch das Polster hindurchgeführt sein.

Zur Zugentlastung ist es ferner von Vorteil, wenn das Anschlußkabel der Anschlußleitungen in der Halterung eingepreßt ist.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: einen erfindungsgemäßen kalorimetrischen Strömungswächter, eingeshraubt in den seitlichen Stützen einer Leitung,
- Fig. 2: einen Längsschnitt durch einen solchen Strömungswächter, und
- Fig. 3: einen vergrößerten Detailausschnitt III von Fig. 2.

Der kalorimetrische Strömungswächter 1 weist ein mit einem Außengewinde 12 zum Einschrauben in einen seitlichen Stutzen 13 einer Rohrleitung 14 für ein strömendes Medium, wie bspw. Kühlwasser, versehenes Gehäuse 5 aus Metall auf, welches in seinem Hauptteil etwa zylindrisch ausgebildet und an seinem äußeren Ende mit einem Außensechskant 15 versehen ist. Der vordere Abschnitt 6 des Gehäuses 5, welcher in das strömende Medium ragt, dessen Strömungsgeschwindigkeit überwacht werden soll und welcher eine verhältnismäßig dünne Stirnwandung 4 aufweist, ist kegelstumpfförmig ausgebildet. An der ebenen Innenfläche 3 der Stirnwandung 4 liegt ein einen temperaturabhängigen Widerstand bildendes Sensorelement 2 mit gutem Wärmekontakt, aber elekrisch isoliert, an. Das Gehäuse 5 weist eine Längsbohrung 11 auf, welche an der Stirnwandung 4 endet. In die Längsbohrung 11 ist eine Halterung 7 aus Kunststoff fest eingesteckt. Die Halterung 7 trägt an ihrem vorderen Ende ein Polster 8 aus gummielastischem od. dgl. wärme- und elektrisch isolierendem Material, auf welchem sich das Sensorelement 2 unter Toleranzausgleich nach hinten abstützt. Die Anschlußleitungen 9 für das Sensorelement 2 sind durch die Halterung 7 und das Polster 8 hindurchgeführt. Das Anschlußkabel 10 der Anschlußleitungen 9 ist in der Halterung 7 eingepreßt aufgenommen.

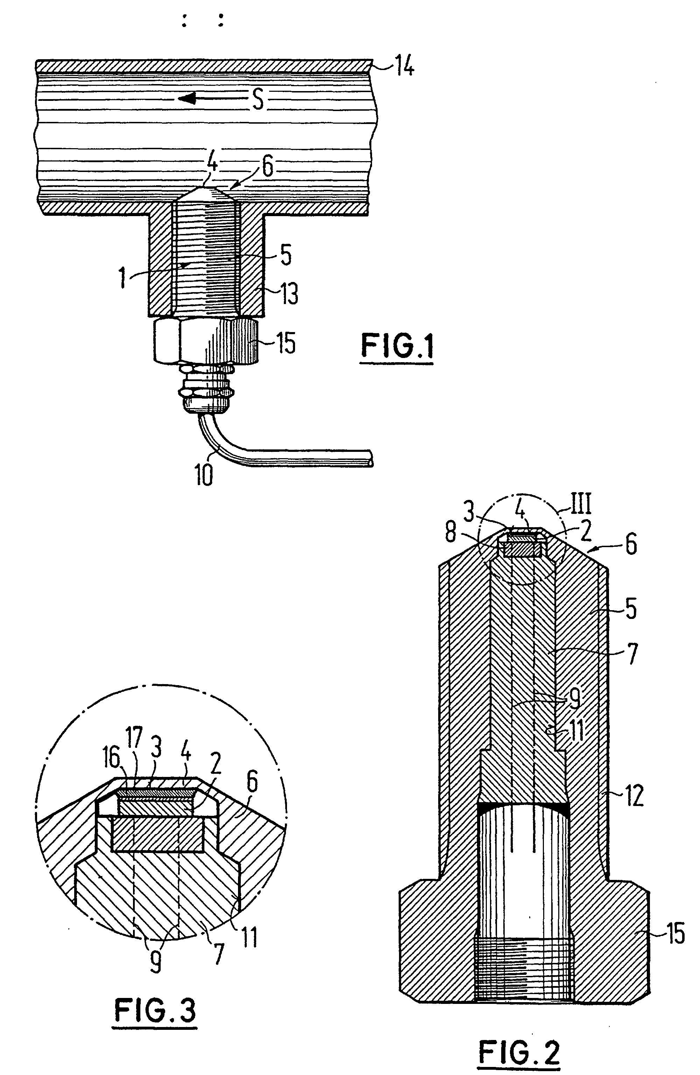

In Fig. 3 ist eine Variante veranschaulicht, bei welcher das Sensorelement 2 mit der Seite seiner wärmeleitenden, elektrisch isolierenden Schicht 16 mittels dauerhafter Lötung 17 bzw. metallischer Verbindung an der Innenfläche 3 der Stirnwandung 4 festgelegt ist.

### Bezugszeichenliste:

- 1: Strömungswächter
- 2: Sensorelement
- 3: Innenfläche
- 4: Stirnwandung
- 5: Gehäuse
- 6: Abschnitt
- 7: Halterung
- 8: Polster
- 9: Anschlußleitungen
- 10: Anschlußkabel
- 11: Längsbohrung
- 12: Außengewinde
- 13: Stutzen
- 14: Rohrleitung
- 15: Außensechskant
- 16: isolierende Schicht
- 17: Lötung

- S: Strömungsrichtung

## Patentansprüche

1. Verwendung eines kalorimetrischen Strömungswächters mit einem Gehäuse (5) sowie mit einem temperaturabhängigen Widerstand als Sensorelement (2), welches mittels elektrischer Stromwärme aufheizbar und dessen Widerstandsänderung meßbar ist, welche ein Maß für die Strömungsgeschwindigkeit eines an dem Sensorelement vorbeiströmenden Mediums darstellt, wobei das Gehäuse (5) an einer Rohrleitung (14), in welcher das Medium fließt, angeschlossen ist, das Sensorelement (2) an der ebenen Innenfläche (3) der Stirnwandung (4) eines kegelstumpfförmigen Vorderabschnitts (6) des Gehäuses (5) anliegt und nur der kegelstumpfförmige Vorderabschnitt (6) des Gehäuses (5) in die Rohrleitung (14) hineinragt.

2. Verwendung nach Anpruch 1, wobei der kegelstumpfförmige Abschnitt (6) nach spanabhebender Vorfertigung mittels Prägestempel im Bereich der Stirnwandung.(4) kalibriert ist.

3. Verwendung nach Anspruch 1 oder 2, wobei das Sensorelement (2) mit einer wärmeleitenden, elektrisch isolierenden Schicht (16) an der Innenfläche (3) der Stirnwandung (4) unmittelbar oder mittelbar anliegt und mittels einer in einer Längsbohrung (11) des Gehäuses (5) reibschlüssig eingesteckten Halterung (7), z.B. aus Kunststoff, an die Innenfläche (3) angedrückt wird.

4. Verwendung nach einem der Ansprüche 1 bis 3, wobei das Sensorelement (2) mit seiner der Innenfläche (3) der Stirnwandung (4) zugewandten wärmeleitenden, elektrisch isolierenden Schicht (16) an der Innenfläche (3) angelötet (17) oder über eine metallische Zwischenschicht festgelegt ist.

5. Verwendung nach einem der Ansprüche 1 bis 4, wobei sich das Sensorelement (2) auf einem an der Vorderseite der Halterung (7) vorgesehenen Polster (8) aus gummielastischem Material abstützt.

6. Verwendung nach einem der Ansprüche 1 bis 5, wobei die elektrischen Anschlußleitungen (9) für das Sensorelement (2) durch die Halterung (7) und durch das Polster (8) hindurchgeführt sind.

7. Verwendung nach einem der Ansprüche 1 bis 6, wobei das Anschlußkabel (10) der Anschlußleitungen (9) in der Halterung (7) eingepresst ist.

## Claims

1. Use of a calorimetric flow monitor with a housing (5) and a temperature-dependent resistor as a sensor element (2) which can be heated by means of electrical current and the resistance change of which can be measured, constituting a measure of the flow speed of a medium flowing past the sensor element, where the housing (5) is connected to a pipeline (14) in which the medium flows, the sensor element (2) lies on the flat inner surface (3) of the face wall (4) of a frustoconical front section (6) of the housing (5) and only the frustoconical front section (6) of the housing (5) protrudes into the pipeline (14).

2. Use according to claim 1, where after machining preparation the frustoconical section (6) is calibrated by means of a stamping die in the area of the face wall (4).

3. Use according to claim 1 or 2, where the sensor element (2) lies with a heat conductive, electrically isolating layer (16) directly or indirectly on the inner face (3) of the face wall (4) and is pressed against the inner face (3) by means of a holder (7) e.g. of plastic inserted with a friction connection into a longitudinal bore (11) of the housing (5).

4. Use according to any of claims 1 to 3, where the sensor element (2) with its heat conductive, electrically isolating layer (16) facing the inner face (3) of the face wall (4) is soldered (17) to the inner face (3) or attached to this via a metallic intermediate layer.

5. Use according to any of claims 1 to 4, where the sensor element (2) rests on a cushion (8) of rubber elastic material provided on the front of the holder (7).

6. Use according to any of claims 1 to 5, where the electrical connecting lines (9) for the sensor element (2) are passed through the holder (7) and through the cushion (8).

7. Use according to any of claims 1 to 6, where the connecting cable (10) for the connecting lines (9) is pressed into the holder (7).

## Revendications

1. Utilisation d'un moniteur d'écoulement calorimétrique avec un boîtier (5) ainsi qu'avec une résistance dépendant de la température comme élément capteur (2), lequel peut être chauffé au moyen de la chaleur de dissipation d'un courant électrique et dont la variation de résistance peut être mesurée, laquelle variation est une mesure pour la vitesse d'écoulement d'un médium s'écoulant le long de l'élément capteur, le boîtier (5) étant raccordé à une conduite (14) dans laquelle s'écoule le médium, l'élément capteur (2) étant contigu à la face interne (3) de la paroi frontale (4) d'une section avant (6) tronconique du boîtier (5) et seule la partie avant (6) tronconique du boîtier (5) pénétrant dans la conduite (14).

2. Utilisation selon la revendication 1, la section tronconique (6) étant calibrée au niveau de la paroi frontale (4) au moyen d'un poinçon après usinage par enlèvement de copeaux.

3. Utilisation selon la revendication 1 ou 2, l'élément capteur (2) avec une couche conductrice de chaleur isolante électriquement étant contigu directement ou indirectement à la face interne (3) de la paroi frontale (4) et collé contre la face interne (3) au moyen d'un support (7), par exemple en plastique, qui est enfiché en force dans un trou longitudinal (11) pratiqué dans le boîtier (5).

4. Utilisation selon l'une des revendications 1 à 3, l'élément capteur (2) avec sa couche conductrice de chaleur isolante électriquement dirigée vers la face interne (3) de la paroi frontale (4) étant soudé à la face interne ou y étant fixé au moyen d'une couche intermédiaire métallique.

5. Utilisation selon l'une des revendications 1 à 4, l'élément capteur (2) s'appuyant sur un coussin (8) prévu sur la partie avant du support (7).

6. Utilisation selon l'une des revendications 1 à 5, les conducteurs de raccordement (9) pour l'élément capteur (2) étant passés à travers le support (7) et le coussin (8).

7. Utilisation selon l'une des revendications 1 à 6, le câble de raccordement (10) des conduits de raccordement (9) étant rentré en force dans le support (7).
